# EUROPÄISCHE PATENTSCHRIFT

(11) **EP 0 648 985 B1**
(45) Veröffentlichungstag und Bekanntmachung des Hinweises auf die Patenterteilung: **10.06.1998**
(21) Anmeldenummer: 94116154.9
(22) Anmeldetag: 13.10.1994
(51) Int. Cl.: F24J 2/26

(54) **Solarabsorber und Verfahren zu dessen Herstellung**
Solar absorber and process of producing the same
Absorbeur solaire et méthode pour sa fabrication

(30) Priorität: 13.10.1993 DE 4334916
(43) Veröffentlichungstag der Anmeldung: 19.04.1995
(73) Patentinhaber: Müller, Friedrich, D-74589 Satteldorf (DE)
(72) Erfinder: Müller, Friedrich, D-74589 Satteldorf (DE)
(74) Vertreter: Schmidt, Steffen J., Dipl.-Ing.

(56) Entgegenhaltungen:
- EP-A- 0 157 370
- DE-A- 3 427 369
- DE-U- 9 213 151
- FR-A- 2 441 126
- GB-A- 2 079 655
- GB-A- 2 183 022
- US-A- 4 080 703

## Beschreibung

Die vorliegende Erfindung betrifft einen Solarabsorber gemäß dem Oberbegriff des Anspruchs 1, wie er aus der DE 92 13 151 U1 bekannt ist, und ein Verfahren zur Herstellung eines solchen Solarabsorbers.

Aus der DE-B-34 27 369 ist ein Solarabsorber bzw. ein Verfahren zu dessen Herstellung bekannt, bei dem die Ellipsen-Hauptachse der Rohrleitung senkrecht zur Absorberplatte verläuft. Diese Anordnung hat zwar den Vorteil, daß ein sehr inniger Kontakt der Rohrleitung mit den Wirkflanken der Haltebacken vorhanden ist, der auch einfach wieder hergestellt werden kann, wenn sich im Laufe des Betriebes des Solarabsorbers der Kontakt wegen der Wärmeexpansion und -kontraktion verschlechtern sollte, allerdings erfordert diese Anordnung relativ viel Platzbedarf in der Richtung quer zur Absorberplatte. Außerdem bewirkt der lange Wärmeleitungsweg durch die Haltebacken einen verringerten Wirkungsgrad des bekannten Solarabsorbers.

Aus der US-A-4 080 703 ist ein Wärmetauscher bekannt, der aus einer wärmeabstrahlenden oder wärmeabsorbierenden Platte mit wärmeleitend darauf befestigten Kupferrohren besteht. Auf der wärmeabstrahlenden bzw. wärmeabsorbierenden Platte sind durch Paare zueinander paralleler Halterippen Rinnen gebildet, in die runde Kupferrohre eingelegt werden, die anschließend mittels eines Werkzeugs zu einem im wesentlichen ovalen Querschnitt verformt werden, damit sie sich an die Halterippen anlegen. Zur Verbesserung des Wärmeübergangs zwischen der Wärmeträgerflüssigkeit und dem Rohr weisen die Kupferrohre eine Vielzahl punktförmiger oder länglicher Vertiefungen auf, die die Turbulenz der durch die Rohrleitung strömenden Flüssigkeit erhöhen.

Der vorliegenden Erfindung liegt die Aufgabe zugrunde, einen Solarabsorber bereitzustellen, der im Vergleich zu herkömmlichen Solarabsorbern bei einfacher Herstellbarkeit eine auch langfristig gute Wärmeübertragung zwischen der den Wärmeträger führenden Rohrleitung und der Absorberplatte sicherstellt.

Diese Aufgabe ist ausgehend von einem Solarabsorber der eingangs genannten Art erfindungsgemäß dadurch gelöst, daß die Rohrleitung eine einzige, sich längs der Rohrleitung erstrekkende Einbuchtung aufweist, die im Bereich ihres von der Absorberplatte abliegenden Nebenscheitels angeordnet ist und die vorzugsweise eine im wesentlichen stetig verlaufende gewölbte Form hat.

Die erwähnte, einzige Einbuchtung führt überraschenderweise dazu, daß die zwischen den beiden Haltebacken eingeklemmte Rohrleitung trotz der großen in einem Solarabsorber auftretenden Temperaturunterschiede bzw. -schwankungen dauerhaft fest im von der Absorberplatte und den beiden Haltebacken gebildeten Rohrleitungsbett gehalten ist, wodurch ein langfristig guter und im wesentlichen gleichbleibender Wärmeübergang von der Absorberplatte auf die Rohrleitung gewährleistet ist.

Bevorzugt greift wenigstens einer der beiden Haltebacken mit seinem freien Rand in die Einbuchtung der Rohrleitung ein.

Wenn die beiden Haltebacken die Rohrleitung jeweils unterschiedlich weit umgreifen, ist eine einfachere Montage möglich, da die Rohrleitung in den Raum zwischen den beiden Haltebacken eingeschwenkt und dann - zusammen mit oder getrennt von den Haltebacken - in die gewünschte Endform gebracht werden kann.

Zur Herstellung des erfindungsgemäßen Solarabsorbers mit einer fluiddurchströmten Rohrleitung, die mittels zweier an einer Absorberplatte im Abstand voneinander angeordneter Haltebacken an der Absorberplatte befestigt ist, weist das Herstellungsverfahren folgende Schritte auf: Einlegen der im Querschnitt runden, elliptischen, oder birnenförmigen Rohrleitung zwischen die beiden Haltebacken, Formen des Querschnitts der Rohrleitung, so daß zwischen Wirkflanken der Haltebacken befindliche Bereiche der Wandung der Rohrleitung fest und im wesentlichen formschlüsssig an den Wirkflanken der Haltebacken anliegen, und der Querschnitt der Rohrleitung zwischen den Haltebacken im wesentlichen die Form wenigstens eines Abschnitts einer Ellipse oder eines Ovals annimmt, deren Nebenscheitel in der zwischen den Haltebacken verlaufenden ersten Ebene und deren Hauptscheitel in einer zu der Absorberplatte im wesentlichen parallel oder zu der ersten Ebene quer verlaufenden zweiten Ebene angeordnet sind, und Einformen einer längs der Rohrleitung verlaufenden, einzigen Einbuchtung in die Rohrleitung im Bereich ihres von der Absorberplatte abliegenden Nebenscheitels.

Damit wird erreicht, daß die Wärmeleitung von der Absorberplatte durch die Haltebacken in die Wandung der Rohrleitung möglichst direkt erfolgt, das heißt, daß der Weg von der Absorberplatte in die Rohrleitung minimiert ist. Außerdem verringert sich so die Höhe der Gesamtanordnung (gesehen in Richtung quer zur Absorberplatte). Dabei kann die Rohrleitung bereits vor der Montage die Querschnittsgestalt haben, die sie zur formschlüssigen Anlage an die Wirkflächen der Haltebacken benötigt. Die Form kann der Rohrleitung jedoch auch erst vermittelt werden, wenn sie sich zwischen den beiden Haltebacken befindet.

Erfindungsgemäß sind die zu verformenden Haltebacken bereits so vorgeformt, daß sie zum Rohrleitungsbett hin geneigt sind. Sie brauchen daher später weniger weit verformt zu werden, wodurch die Gefahr eines Bruchs der Haltebacken reduziert ist, und der Verformungsvorgang gestaltet sich einfacher, da der zur Verformung notwendige Druck bereits von Beginn an statt von der Seite im wesentlichen von oben aufgebracht werden kann.

Bevorzugte Ausführungsformen des erfindungsgemäßen Solarabsorbers bzw. dessen Herstellungsverfahrens sind in den abhängigen Ansprüchen angegeben.

Um mit geringeren Verformungskräften auszukommen, ist es vorteilhaft, wenn zumindest einer der beiden Haltebacken wenigstens einen Schwächungsbereich aufweist. Es können dann schwächere Herstellungsvorrichtungen verwendet werden und der Verformungsvorgang kann ggf. einstufig ausgeführt werden. Auch kann durch das Vorsehen derartiger Schwächungsbereiche der Krümmungsverlauf und damit das optimale Anliegen der Wandung der Rohrleitung an den Wirkflächen der Haltebacken gesteuert werden. Bevorzugt hat der Schwächungsbereich die Gestalt einer parallel zum freien Rand des Haltebackens verlaufenden Ausnehmung. Die beispielsweise kerbenförmige Ausnehmung kann auf der Außenseite eines Haltebackens angeordnet sein, sie ist jedoch bevorzugt auf der der Rohrleitung zugewandten Innenseite eines bevorzugt auf der der Rohrleitung zugewandten Innenseite eines Haltebackens angeordnet. Ein Haltebacken kann auch mehrere in Querrichtung mit Abstand voneinander angeordnete und vorzugsweise parallel zueinander verlaufende Ausnehmungen aufweisen. Auf diese Weise kann beispielsweise beim Andrücken des oder der Haltebacken gegen die Rohrleitung die gewünschte Endform der Rohrleitung noch differenzierter gesteuert werden.

Sollte sich bei einer Störung der Innendruck der Rohrleitung erhöhen, so daß die im Querschnitt elliptische oder ovale Rohrleitung sich im Bereich ihrer beiden Nebenscheitel erweitert und die Wandung der Rohrleitung im Bereich ihrer Hauptscheitel nicht mehr an den Wirkflächen der Haltebacken anliegt, kann das Problem auftreten, daß die Rohrleitung von den Haltebacken freikommt.

Um dies sicher zu vermeiden weist bei dem erfindungsgemäßen Solarabsorber die Rohrleitung im Bereich ihres von der Absorberplatte abliegenden Nebenscheitels eine Einbuchtung auf, die eine im wesentlichen stetig verlaufende gewölbte Form hat. Dadurch erhält die Rohrleitung eine im wesentlichen nierenförmige Querschnittsgestalt, wodurch die Rohrleitung auch bei erhöhtem Druck ihre Gestalt soweit beibehält, daß ein Freikommen der Rohrleitung aus den Haltebacken nicht auftreten kann.

Bei einer bevorzugten Ausgestaltung des erfindungsgemäßen Verfahrens findet das Umformen des Querschnitts der Rohrleitung, das Andrücken des oder der Haltebacken an die Rohrleitung, und das Einformen der Einbuchtung in einem einzigen Arbeitsgang statt. Für einen solchen Arbeitsgang besonders geeignet ist eine Rollenmaschine, bei der eine oder mehrere sich längs der entsprechenden Rohrleitung bewegende Rollen den oder die Haltebacken auf die Rohrleitung herunterdrücken und zugleich die Einbuchtung im Bereich des von der Absorberplatte abliegenden Nebenscheitels der Rohrleitung in letztere einformen. Auf diese Weise lassen sich auch sehr lange Absorberprofile kostengünstig herstellen.

Zur weiteren Sicherheit und zur verbesserten Wärmeleitung greift vorzugsweise wenigstens einer der beiden Haltebacken mit seinem freien Rand in die Einbuchtung der Rohrleitung ein.

Bei einer weiteren Ausführungsform ist wenigstens einer der beiden Haltebacken aus mehreren Teilen gebildet, die miteinander lösbar verbunden sind. Eine konkrete Ausgestaltung hiervon besteht darin, daß eines der beiden Teile der Haltebacken einen Haken aufweist, der in eine entsprechend geformte Rast an dem anderen Teil des Haltebacken eingreift.

Zur Vergrößerung der Berührungsfläche und damit des Wärmeübergangs zwischen der Rohrleitung und den Haltebacken weist wenigstens einer der beiden Haltebacken an seiner Wirkfläche erhabene Bereiche auf, die in die Wandung der Rohrleitung formschlüssig eingreifen. Dies gilt insbesondere, wenn die Absorberplatte bzw. die daran angeordneten Haltebacken aus Aluminium und die Rohrleitung aus weicherem Kupfer gebildet sind.

Eine bevorzugte Ausgestaltung des Herstellungsverfahrens des erfindungsgemäßen Solarabsorbers besteht darin, daß wenigstens einer der beiden Haltebacken vor dem Einlegen der Rohrleitung eine Stellung einnimmt, die ein Einlegen der Rohrleitung zwischen die Haltebacken ermöglicht, und daß nach dem Einlegen der Rohrleitung zwischen die Haltebacken eine Kraft auf wenigstens einen der beiden Haltebacken so ausgeübt wird, daß dieser zusammen mit der Rohrleitung so verformt wird, daß die Bereiche der Wandung der Rohrleitung sich formschlüssig an die Wirkflächen der Haltebacken anlegen.
Alternativ dazu kann wenigstens einer der beiden Haltebacken vor dem Einlegen der Rohrleitung eine Stellung einnehmen, die ein Einlegen der Rohrleitung zwischen die Haltebacken ermöglicht, wobei nach dem Einlegen der Rohrleitung zwischen die Haltebacken eine Kraft auf die Rohrleitung ausgeübt wird, damit sich die Wandung der Rohrleitung wenigstens teilweise formschlüssig an die Wirkflächen der Haltebacken anlegen, und dann wird eine Kraft auf wenigstens einen der beiden Haltebacken so ausgeübt, daß sich dessen Wirkflächen formschlüssig an die Bereiche der Wandung der Rohrleitung anlegen.

Die Rohrleitung ist in einem Solarabsorber üblicherweise entweder mäanderförmig geführt, wobei nur die geraden Bereiche der mäanderförmigen Rohrleitung zwischen Haltebacken eingeklemmt sind, oder es sind mehrere parallel zueinander verlaufende Rohrleitungen in einem Solarabsorber vorhanden, deren Enden durch Sammelleitungen miteinander verbunden sind. Auch bei der zuletzt genannten Bauform eines Solarabsorbers sind nur die parallel zueinander verlaufenden Rohrleitungen mittels Haltebacken eingeklemmt. Abhängig von der äußeren Gestalt eines Solarabsorbers können die parallel zueinander verlaufenden Rohrleitungen bzw. die parallel zueinander angeordneten Rohrleitungsabschnitte einer mäanderförmig gebogenen Rohrleitung unterschiedlich lang sein. Dies ist zum Beispiel dann der Fall, wenn der Solarabsorber eine von der üblichen quadratischen oder rechteckigen Gestalt abweichende Form hat, etwa eine in der Draufsicht dreieckige, fünfeckige, sechs- oder achteckige Gestalt. Gemäß einer Ausgestaltung des erfindungsgemäßen Herstellungsverfahrens werden dann, wenn unterschiedlich lange Rohrleitungen bzw. Rohrleitungsabschnitte in einem Solarabsorber vorhanden sind, die zwischen den Haltebacken eingelegten Rohrleitungen so verformt, daß möglichst alle Rohrleitungen bzw. Rohrleitungsabschnitte des Solarabsorbers den gleichen Druckverlust aufweisen. Dies wird erreicht, indem die einzelnen Rohrleitungen bzw. Rohrleitungsabschnitte nach dem Einlegen unterschiedlich weit verformt werden. Beispielsweise wird eine gegenüber den anderen Rohrleitungen kürzere Rohrleitung nach dem Einlegen soweit verformt, daß sie einen kleineren Durchflußquerschnitt erhält, wodurch ihr Druckverlustwert auf den Wert des Druckverlustes einer längeren Rohrleitung mit größerem Durchflußquerschnitt erhöht wird. Das Verformen der Rohrleitung kann wie zuvor oben beschrieben entweder durch eine direkte Verformung der Rohrleitung nach ihrem Einlegen zwischen den Haltebacken erfolgen oder auch indirekt über eine Verformung des oder der Haltebacken, die dann die zwischen ihnen eingeschlossene Rohrleitung entsprechend verformen. Das Einstellen der unterschiedlich langen Rohrleitungen bzw. Rohrleitungsabschnitte auf einen zumindest im wesentlichen gleichen Druckverlust verhindert den unerwünschten Zustand einer ungleichmäßigen Durchströmung der einzelnen Rohrleitungen bzw. Rohrleitungsabschnitte in einen Solarabsorber.

Bei dem erfindungsgemäßen Verfahren wird in die Rohrleitung im Bereich ihres von der Absorberplatte abliegenden Nebenscheitels eine Einbuchtung eingeformt, die eine im wesentlichen stetig verlaufende gewölbte Form erhält. Mittels einer solchen Einbuchtung lassen sich unterschiedlich lange Rohrleitungen bzw. Rohrleitungsabschnitte noch besser auf einen gleichen Druckverlust einstellen, beispielsweise dann, wenn eine zwischen den Haltebacken eingelegte Rohrleitung im Rohrleitungsbett nicht mehr seitlich ausweichen kann, obwohl ihr Durchflußquerschnitt zur Erzielung des gewünschten Druckverlustwertes noch vermindert werden muß.

Gemäß einer noch weiteren Ausgestaltung des erfindungsgemäßen Herstellungsverfahrens kann das Rohrleitungsbett im Bereich des der Absorberplatte benachbarten Nebenscheitels eine bevorzugt stetig gewölbte und sich längs des Rohrleitungsbetts erstrekkende Ausbuchtung aufweisen. Eine solche Ausbuchtung unterstützt die natürliche Formfindung einer im Ausgangszustand runden oder ovalen Rohrleitung, denn beim Flachdrücken solcher Rohrleitungen beginnt die Umfangswandung der Rohrleitung sich nach innen zu wölben, wenn ein bestimmter Verformungszustand überschritten worden ist. Die genannte Ausbuchtung im Rohrleitungsbett unterstützt diese natürliche Verformungstendenz einer Rohrleitung und läßt sie an einer definierten Stelle auftreten, wobei gleichzeitig dafür gesorgt ist, daß auch dieser sich ansonsten vom Rohrleitungsbett abhebende Teil der Umfangswand der Rohrleitung in wärmeleitendem Kontakt mit dem Rohrleitungsbett bleibt.

Zur optimalen Formschlüssigkeit der Rohrleitung mit den Wirkflächen der Haltebacken wird auf wenigstens einen der beiden Haltebacken eine Kraft ausgeübt, die diesen mit seinem freien Rand in die Einbuchtung der Rohrleitung drängt.

Bei bevorzugten Ausführungsformen des erfindungsgemäßen Solarabsorbers ist der freie Rand zumindest eines der Haltebacken so ausgeführt, daß auch nach dem Verformen des Haltebackens und seiner dadurch erreichten formschlüssigen Anlage an die Außenfläche der Rohrleitung sichergestellt ist, daß ein Werkzeug zwischen den Haltebacken und die Rohrleitung greifen kann, um den Haltebacken gegebenenfalls wieder von der Rohrleitung zu lösen. Dies ist zum einen wichtig, um nach einem fehlerhaften Verformungsvorgang eine Reparaturmöglichkeit zu erhalten, und zum anderen ist es im Zusammenhang mit einem späteren Recycling des Solarabsorbers wichtig, um durch ein Aufbiegen der Haltebacken beispielsweise aus Kupfer bestehende Rohrleitungen von einer Aluminium-Absorberplatte trennen zu können. Vorteilhaft wird ein Zwischenraum zwischen der Außenfläche der Rohrleitung und dem freien Rand des gegen sie gedrückten Haltebackens erzielt, indem der freie Rand des Haltebackens auf seiner der Rohrleitung zugekehrten Seite eine längs der Rohrleitung verlaufende Ausnehmung aufweist. Alternativ kann das letzte Stück des freien Rands des oder der Haltebacken etwas nach oben gebogen sein, so daß ein Werkzeug den oder die Haltebacken am freien Rand untergreifen kann. Bei Ausführungsformen des erfindungsgemäßen Solarabsorbers in deren Rohrleitung im Bereich ihres von der Absorberplatte abliegenden Nebenscheitels eine Einbuchtung eingeformt ist, kann die Möglichkeit eines Werkzeugangriffs auch dadurch geschaffen werden, daß der freie Rand des oder der Haltebacken nicht in die Einbuchtung gedrückt wird.

Zur Verdeutlichung weiterer Eigenschaften und Vorteile werden mehrere Ausführungsformen des erfindungsgemäßen Solarabsorbers bzw. Varianten dessen Herstellungsverfahren unter Bezugnahme auf die beigefügten Zeichnungen erläutert, in denen:
- Fig. 1: eine schematische Querschnittsdarstellung einer ersten Ausführungsform einer Absorberplatte mit angebrachter Rohrleitung zeigt,
- Fig. 2: eine schematische Querschnittsdarstellung einer zweiten Ausführungsform einer Absorberplatte mit angebrachter Rohrleitung zeigt,
- Fig. 3: eine schematische Querschnittsdarstellung einer dritten Ausführungsform einer Absorberplatte mit angebrachter Rohrleitung zeigt,
- Fig. 4a und 4b: den Montagevorgang einer vierten Ausführungsform einer Absorberplatte mit angebrachter Rohrleitung zeigt,
- Fig. 4c: den vorhergehenden Ausführungsformen ähnliche, bis 4f jeweils leicht abgewandelte Ausführungsformen zeigen, die speziell das spätere Recycling erleichtern,
- Fig. 5: eine schematische Querschnittsdarstellung einer fünften Ausführungsform einer Absorberplatte mit anzubringender Rohrleitung zeigt, und
- Fig. 6: eine schematische Querschnittsdarstellung einer sechsten Ausführungsform einer Absorberplatte mit angebrachter Rohrleitung zeigt.

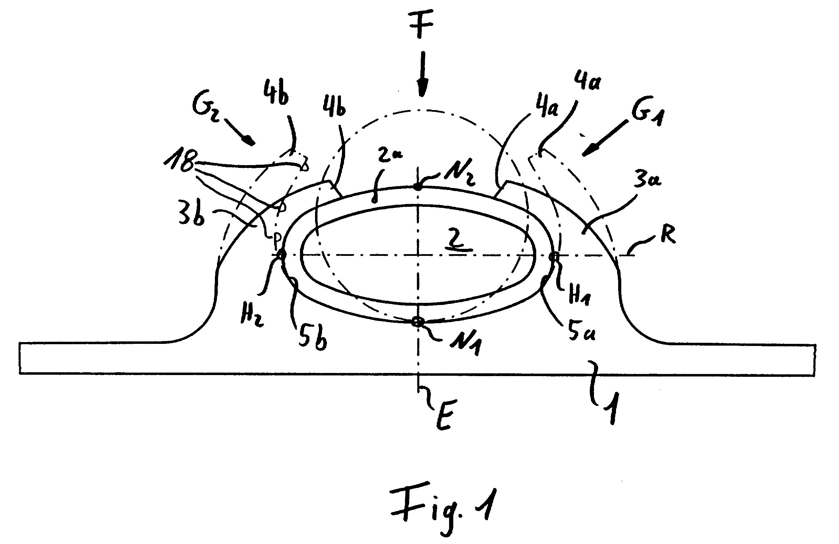

Fig. 1 zeigt einen Solarabsorber, bestehend aus einer im Querschnitt im wesentlichen rechteckigen Absorberplatte 1 und einer ein nicht dargestelltes Wärmetransportmedium (Sole, Öl oder dergl.) führenden Rohrleitung 2, wobei beide aus einem gut wärmeleitenden Material, z.B. Aluminium, Kupfer oder dergl. gebildet sind. Die Rohrleitung 2 ist mittels zweier an der Absorberplatte 1 im Abstand voneinander angeordneter Haltebacken 3a, 3b an der Absorberplatte 1 befestigt.

Die Haltebacken 3a, 3b sind an der Absorberplatte 1 einstückig und materialeinheitlich angeformt und haben jeweils eine sich zu ihrem freien Rand 4a, 4b hin verjüngende Querschnittsgestalt. An ihren einander zugewandten Wirkflanken 5a, 5b sind die Haltebacken 3a, 3b im Querschnitt konvex geformt und laufen jeweils zueinander hin so aus, daß sich ein etwa halb-ellipsenschalenförmiger Raum zwischen ihnen ergibt.

In Fig. 1 sind strich-punktiert die beiden Haltebacken 3a, 3b und die Rohrleitung 2 in einer Stellung gezeigt, die sie vor dem Zusammenbau zu dem Solarabsorber haben. Ersichtlich nehmen dabei die beiden Haltebacken 3a, 3b eine zwar zur Absorberplatte 1 geneigte, aber senkrechtere Stellung ein; die Rohrleitung 2 ist im Querschnitt kreisrund und wird in den freien Raum zwischen den Wirkflanken 5a, 5b der Haltebacken 3a, 3b eingelegt.

Bei der Montage des Solarabsorbers wird die Wandung 2a der Rohrleitung 2 zwischen den Wirkflanken 5a, 5b der Haltebacken 3a, 3b durch eine Kraft F so verformt, daß die Wandung 2a zumindest in der der Absorberplatte 1 zugewandten Hälfte fest und im wesentlichen formschlüssig an den Wirkflanken 5a, 5b der Haltebacken 3a, 3b anliegt.

Anschließend oder gleichzeitig werden die freien Ränder 4a, 4b beiden Haltebacken 3a, 3b durch die Kräfte G1, G2 so auf die Rohrleitung 2 gedrückt, daß der lichte Querschnitt der Rohrleitung 2 zwischen den Haltebacken 3a, 3b im wesentlichen die Form wenigstens eines Abschnitts einer Ellipse oder eines Ovals aufweist, deren (dessen) Nebenscheitel N1, N2 in einer zwischen den Haltebacken 3a, 3b verlaufenden ersten Ebene E und deren (dessen) Hauptscheitel H1, H2 in einer zur Absorberplatte 1 im wesentlichen parallel oder zu der ersten Ebene E quer verlaufenden zweiten Ebene R angeordnet sind.

Bei der Ausführungsform nach Fig. 1 sind die beiden Haltebacken 3a, 3b zu der ersten Ebene E symmetrisch gestaltet, das heißt, daß die beiden Haltebacken 3a, 3b die Rohrleitung 2 auch jeweils gleich weit umgreifen.

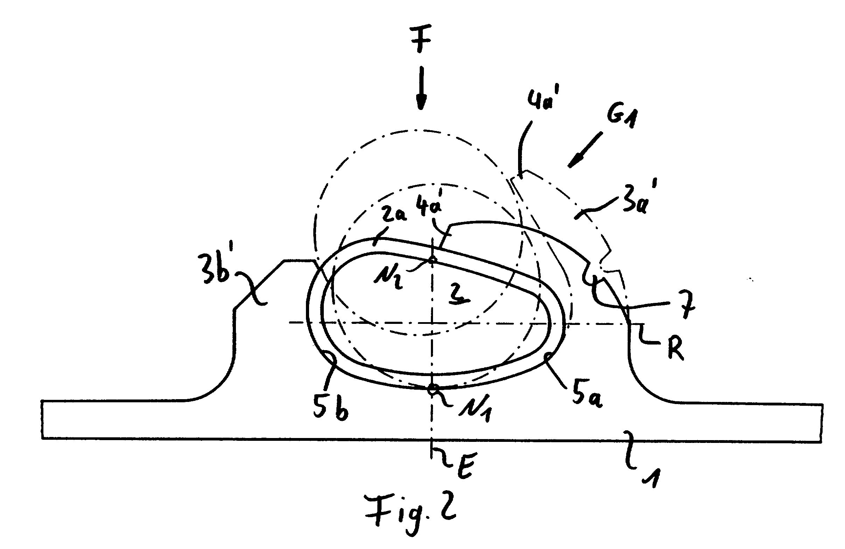

Bei der Ausführungsform nach Fig. 2 sind die Haltebacken 3a', 3b' asymmetrisch geformt und umgreifen die Rohrleitung 2 unterschiedlich weit.

Im unmontierten Zustand hat in der Ausführungsform nach Fig. 2 die Rohrleitung 2 einen im wesentlichen kreisrunden Querschnitt und wird in den freien Raum zwischen einen unverformbaren Haltebacken 3b' und einen verformbaren Haltebacken 3a' eingelegt. Zur besseren Vorherbestimmbarkeit der Gestalt des Haltebackens 3a' nach der Verformung durch die Kraft G1 und zur leichteren Verformbarkeit weist der Haltebacken 3a' einen Schwächungsbereich 7 auf, der die Gestalt einer parallel zum freien Rand 4a des Haltebackens verlaufenden Ausnehmung aufweist.

Nach der Einwirkung der Kräfte F, G1 hat die Rohrleitung 2 bzw. der Haltebacken 3a' die in Fig. 2 durchgehend gezeichnete Gestalt, das heißt die Rohrleitung 2 liegt fest und formschlüssig an den Wirkflächen 5a, 5b der Haltebacken 3a', 3b' an. Jedoch hat die von der Absorberplatte 1 abliegende Hälfte der Rohrleitung 2 insofern eine asymmetrische Gestalt, als sie durch den Haltebacken 3a' nicht oval geformt, sondern abgeflacht wird, was eine weitgehende Umformung der Rohrleitung 2 und damit eine formschlüssige und einen guten Wärmeübergang sicherstellende Verbindung zwischen den Wirkflächen 5a, 5b und der Wandung 2a der Rohrleitung 2 bedeutet.

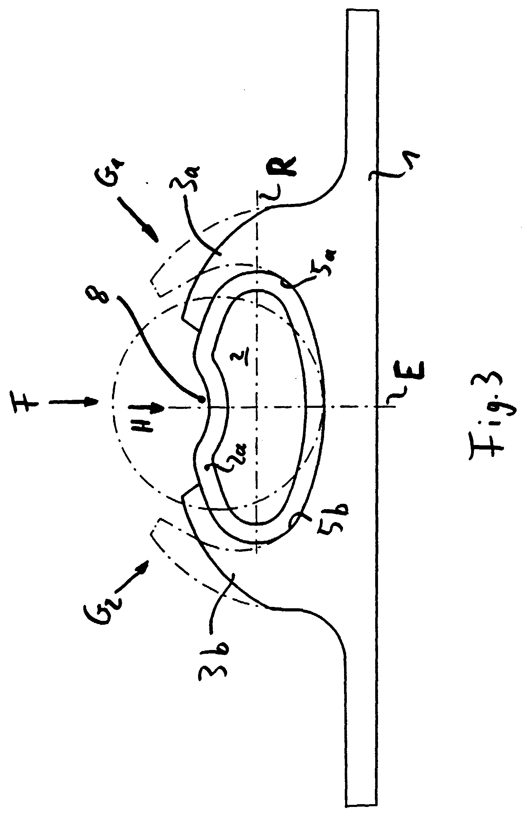

In Fig. 3 ist eine in Fig. 1 nicht dargestellte Einbuchtung 8 gezeigt. Die Einbuchtung 8, die im Bereich des von der Absorberplatte 1 abliegenden Nebenscheitels N2 der Rohrleitung 2 gelegen ist, hat eine im wesentlichen stetig verlaufende gewölbte Form. Die Einbuchtung 8 wird nach der Montage der Rohrleitung 2 und dem Umformen der Haltebacken 3a, 3b durch die Kräfte F, G1, G2 dadurch hergestellt, daß eine zusätzliche Kraft H auf die Wandung 2a der Rohrleitung 2 aufgebracht wird, die in der ersten Ebene E wirkt.

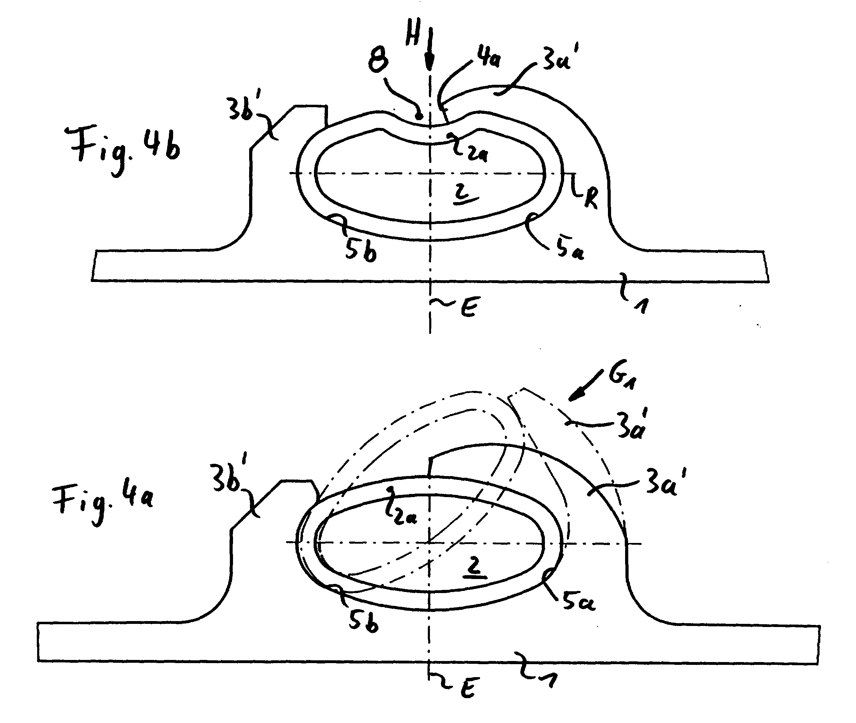

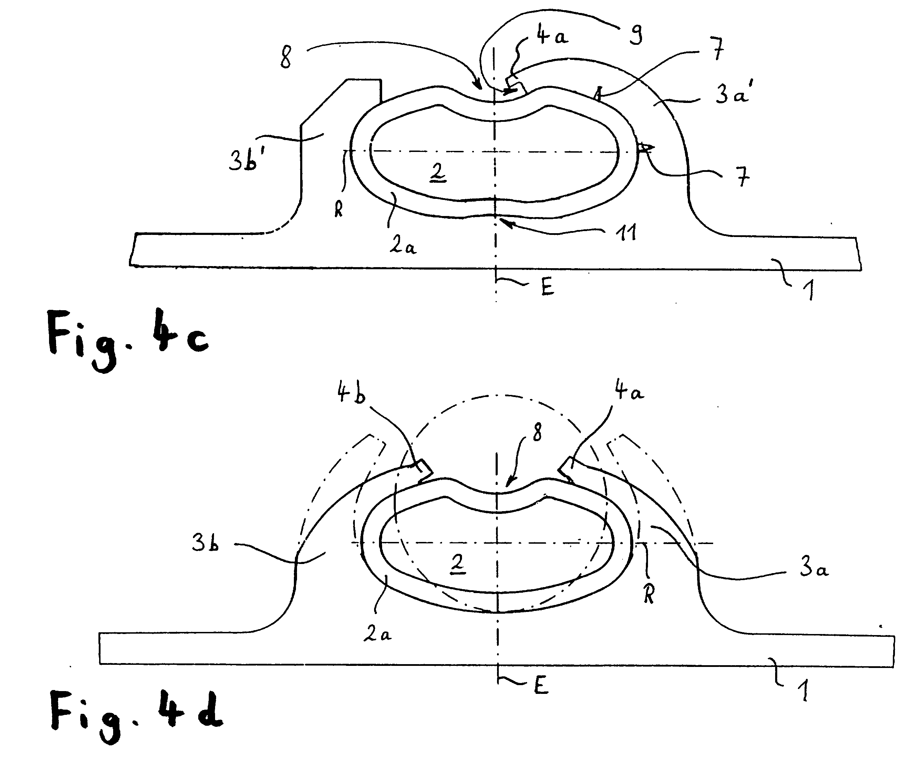

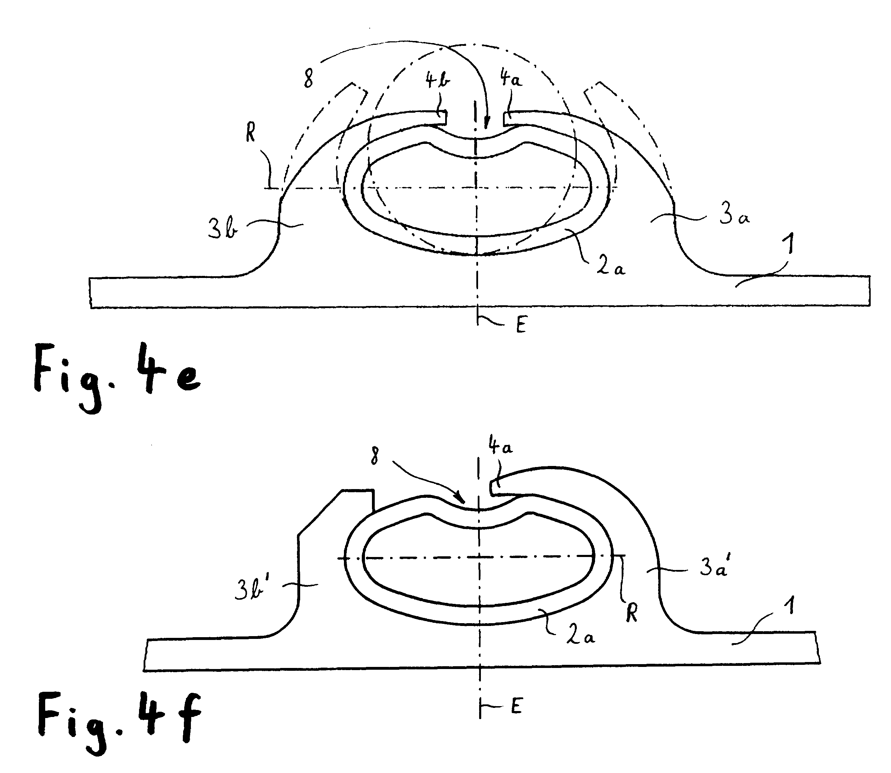

Bei der Ausführungsform nach den Fig. 4a, 4b hat die Rohrleitung 2 bereits vor ihrem Einlegen in den freien Raum zwischen den Haltebacken 3a', 3b' eine ovale Querschnittsform, so daß die Rohrleitung 2 leicht in den freien Raum zwischen den Haltebacken 3a', 3b' eingelegt werden kann. Die Haltebacken 3a', 3b' haben hier im wesentlichen die gleiche Gestalt wie in der Fig. 2, das heißt, der Haltebacken 3a' ist soweit verlängert, daß er fast bis zu der Ebene E reicht, wenn er durch die Kraft G1 in die mit durchgehenden Linien gezeichnete Stellung umgeformt wird, in der er die Rohrleitung 2 fest und formschlüssig umschließt.

Anschließend wird auf den freien Rand 4a und den Nebenscheitel N2 der Wandung 2a der Rohrleitung 2 die Kraft H ausgeübt, so daß die Einbuchtung 8 in der Wandung 2a der Rohrleitung 2 entsteht und der freie Rand 4a des Haltebackens 3a' zumindest teilweise in die Einbuchtung 8 eingreift (siehe Fig. 4b). Auch bei Ausführungsformen mit zwei gleich langen Haltebacken sind die Haltebacken bevorzugt so lang (siehe z.B. Fig. 4e), daß ihr freier Rand in die Einbuchtung 8 gedrückt werden kann.

In Fig. 4c ist eine etwas abgewandelte vierte Ausführungsform dargestellt, bei der der Haltebacken 3a' nicht wie in Fig. 2 einen Schwächungsbereich 7 außen, sondern zwei parallel zueinander verlaufende Schwächungsbereiche 7 innen am Haltebacken 3a' aufweist. Die in Fig. 4c dargestellten Schwächungsbereiche 7 haben einen in etwa V-förmigen Querschnitt und erstrecken sich längs des Haltebackens 3a'. Statt der in Fig. 4c dargestellten zwei Schwächungsbereiche 7 können auch mehrere derartige Schwächungsbereiche oder auch nur ein solcher Schwächungsbereich am Haltebacken 3a' innen vorhanden sein. Ferner weist der freie Rand 4a des Haltebackens 3a' eine längs desselben verlaufende Ausnehmung 9 auf, durch die sichergestellt ist, daß der an die Rohrleitung 2 gedrückte Haltebacken 3a' von einem Werkzeug untergriffen und wieder aufgebogen werden kann, um bespielsweise im Rahmen von Recyclingvorgängen die Rohrleitung 2 von der Absorberplatte 1 trennen zu können. Bei Ausführungsformen, bei denen nicht nur der Haltebacken 3a' umgeformt wird, weist auch der Haltebacken 3b eine Ausnehmung 9 an seinem freien Rand auf. Alternativ kann, wie in Fig. 4d dargestellt ist, der freie Rand des oder der Haltebacken, hier die freien Ränder 4a und 4b der Haltebacken 3a und 3b, etwas nach oben, d.h. von der Außenfläche der Rohrleitung 2 weggebogen sein, um so ebenfalls ein Untergreifen eines hier nicht dargestellten Werkzeuges zu ermöglichen.

Bei Ausführungsformen des Solarabsorbers, bei denen der oder die Haltebacken bis über die Einbuchtung 8 reichen, kann der zum Aufbiegen des oder der Haltebacken erforderliche Werkzeugangriff auf einfache Weise auch dadurch bereitgestellt werden, daß der freie Rand 4a und/oder 4b der Haltebacken 3a, 3b bzw. 3a' nicht in die Einbuchtung 8 gedrückt wird (siehe hierzu die Figuren 4e und 4f).

Die in Fig. 4c dargestellte Ausführungsform unterscheidet sich von den in den übrigen Figuren gezeigten Ausführungsformen auch dadurch, daß im Rohrleitungsbett eine erhabene, stetig gewölbte Ausbuchtung 11 im Bereich des der Absorberplatte zugekehrten Nebenscheitels N1 vorhanden ist. Die Ausbuchtung 11 erstreckt sich längs des Rohrleitungsbetts und unterstützt beim Umformvorgang der Rohrleitung 2 deren natürliche Formfindung. Auch bei im Vergleich zur Ausgangsform der Rohrleitung 2 weitgehenden Umformvorgängen wird durch die Ausbuchtung 11 ein wärmeleitender Kontakt zwischen der Absorberplatte 1 und der Rohrleitung 2 gewährleistet, der ohne die Ausbuchtung 11 aufgrund der bei einer starken Verformung der Rohrleitung 2 stattfindenden Einwölbung derselben in diesem Bereich nicht mehr vorhanden wäre.

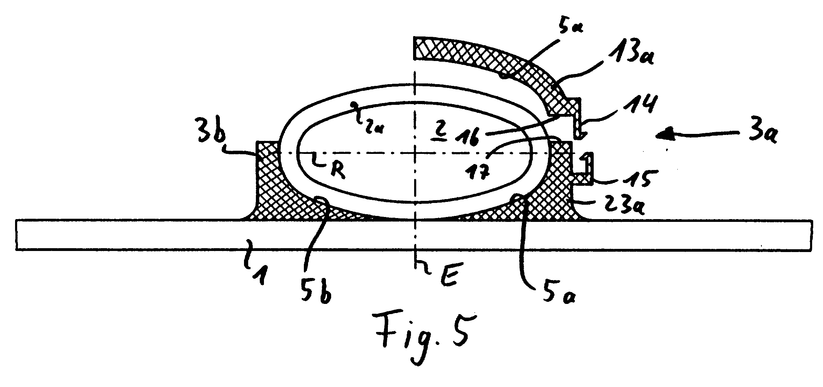

Bei der Ausführungsform nach Fig. 5 ist der Haltebacken 3a aus zwei Teilen 13a, 23a ausgeführt, die miteinander lösbar verbunden sind. Dazu weist das Teil 13a einen Haken 14 auf, der in eine entsprechend geformte Rast 15 an dem anderen Teil 23a des Haltebackens 3a formschlüssig eingreift und mit diesem lösbar verrastet.

Die Wandung 2a der Rohrleitung 2 hat hierbei vor der Montage des Haltebackens 3a bereits eine ovale Querschnittsform, die der Gestalt der Wirkfläche 5a, 5b entspricht. Nach dem Verrasten des Teils 13a des Haltebackens 3a, dessen der Wandung 2a der Rohrleitung 2 zugewandte Seite ebenfalls der Gestalt der Rohrleitung 2 in diesem Bereich im wesentlichen entspricht, ist auch bei dieser Ausführungsform ein inniger Wärmeleitungskontakt zwischen den Wirkflächen 5a, 5b und der Wandung 2a der Rohrleitung 2 gewährleistet. Auch die Flächen 16, 17 an den beiden Teilen des Haltebackens 3a sind so genau gearbeitet, daß dort keine nennenswerten Wärmeübergangsverluste auftreten.

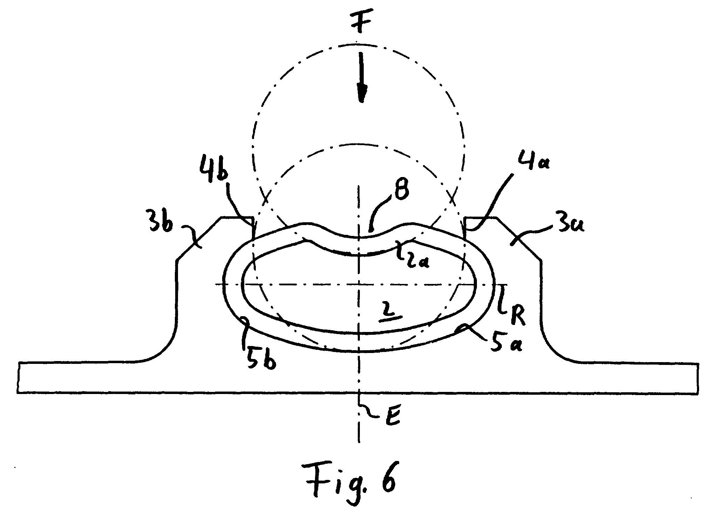

Bei der Ausführungsform nach Fig. 6 sind beide Haltebacken 3a, 3b unverformbar gestaltet und ihre freien Ränder 4a, 4b sind so voneinander beabstandet, daß die im Ausgangszustand im Querschnitt kreisrunde Rohrleitung 2 in den freien Raum zwischen die beiden Haltebacken 3a, 3b eingebracht werden kann.

Die Wirkflächen 5a, 5b der beiden Haltebacken 3a, 3b haben eine im Querschnitt ellipsenschalenförmige Gestalt, in die auch die Rohrleitung 2 durch eine in der ersten Ebene E wirkende Kraft F gebracht wird, die bewirkt, daß die Wandung 2a der Rohrleitung 2 sich formschlüssig und fest an die Wirkflächen 5a, 5b der Haltebacken 3a, 3b anschmiegt.

Anschließend wird eine Einbuchtung 8 in den der Absorberplatte 1 abgewandten Bereich der Wandung 2a der Rohrleitung in der oben beschriebenen Weise eingearbeitet.

Bei allen beschriebenen Ausführungsformen können die Haltebacken 3a, 3b an ihren Wirkflächen 5a, 5b erhabene Bereiche 18 aufweisen, die in die Wandung 2a der Rohrleitung 2 formschlüssig eingreifen (siehe zum Beispiel Fig. 1).

Des weiteren ist es nicht notwendig, daß die erste Ebene E und die zweite Ebene R rechtwinklig zueinander verlaufen, und die erste Ebene E parallel zu der Absorberplatte 1 verläuft. Selbstverständlich kann die erste Ebene E gegenüber der Absorberplatte 1 auch geneigt verlaufen.

## Patentansprüche

1. Solarabsorber mit einer fluiddurchströmbaren Rohrleitung (2), die mittels zumindest zweier an einer Absorberplatte (1) im Abstand voneinander angeordneter Haltebacken (3a, 3b) an der Absorberplatte (1) befestigt ist, wobei die Wandung (2a) der Rohrleitung (2) satt und im wesentlichen formschlüssig an den Wirkflanken (5a, 5b) der Haltebacken (3a, 3b) anliegt und der Querschnitt der Rohrleitung (2) zwischen den Haltebacken (3a, 3b) im wesentlichen die Form wenigstens eines Abschnitts einer Ellipse oder eines Ovals hat, deren (dessen) Nebenscheitel (N1, N2) in einer zwischen den Haltebacken (3a, 3b) verlaufenden ersten Ebene (E) und deren (dessen) Hauptscheitel (H1, H2) in einer zur Absorberplatte im wesentlichen parallel oder zu der ersten Ebene (E) quer verlaufenden zweiten Ebene (R) angeordnet sind,
dadurch gekennzeichnet, daß die Rohrleitung (2) im Bereich ihres von der Absorberplatte (1) abliegenden Nebenscheitels (N2) eine einzige, sich längs der Rohrleitung (2) erstreckende Einbuchtung (8) aufweist, die insbesondere eine im wesentlichen stetig verlaufende gewölbte Form hat.

2. Solarabsorber nach Anspruch 1,
dadurch gekennzeichnet, daß die beiden Haltebacken (3a, 3b) die Rohrleitung (2) jeweils unterschiedlich weit umgreifen.

3. Solarabsorber nach Anspruch 1 oder 2,
dadurch gekennzeichnet, daß wenigstens einer der beiden Haltebacken (3a, 3b) mit seinem freien Rand (4a, 4b) in die Einbuchtung (8) der Rohrleitung (2) eingreift.

4. Solarabsorber nach einem der Ansprüche 1 bis 3,
dadurch gekennzeichnet, daß zumindest einer der beiden Haltebacken (3a, 3b) an seiner Innen und/oder seiner Außenseite wenigstens einen Schwächungsbereich (7) aufweist, der insbesondere die Gestalt einer parallel zum freien Rand des Haltebackens (4a, 4b) verlaufenden Ausnehmung (7) mit insbesondere V-förmigem Querschnitt hat.

5. Solarabsorber nach einem der vorhergehenden Ansprüche,
dadurch gekennzeichnet, daß wenigstens einer der beiden Haltebacken (3a, 3b) aus mehreren Teilen (13a, 23a) gebildet ist, die miteinander lösbar verbunden sind.

6. Solarabsorber nach Anspruch 5,
dadurch gekennzeichnet, daß eines der beiden Teile (13a) des Haltebackens (3a) einen Haken (14) aufweist, der in eine entsprechend geformte Rast (15) an dem anderen Teil (23a) des Haltebacken (3a) eingreift.

7. Solarabsorber nach einem der vorhergehenden Ansprüche,
dadurch gekennzeichnet, daß wenigstens einer der beiden Haltebacken (3a, 3b) an seiner Wirkfläche (5a, 5b) erhabene Bereiche (18) aufweist, die in die Wandung (2a) der Rohrleitung (2) formschlüssig eingreifen.

8. Solarabsorber nach einem der vorherigen Ansprüche,
dadurch gekennzeichnet, daß zumindest einer der freien Ränder (4a, 4b) der Haltebacken (3a, 3b) eine längs desselben verlaufende Ausnehmung (9) aufweist.

9. Solarabsorber nach einem der Ansprüche 1 bis 7,
dadurch gekennzeichnet, daß zumindest einer der freien Ränder (4a, 4b) der Haltebacken (3a, 3b) von der Außenseite der Rohrleitungswandung (2a) weggerichtet ist, um ein Untergreifen des Haltebackens (3a) und/oder des Haltebackens (3b) zu ermöglichen.

10. Solarabsorber nach einem der vorherigen Ansprüche,
dadurch gekennzeichnet, daß ein in der Absorberplatte (1) ausgebildetes Rohrleitungsbett eine erhabene und längs der Haltebacken (3a, 3b) verlaufende Ausbuchtung (11) im Bereich des der Absorberplatte (1) benachbarten Nebenscheitels (N1) aufweist.

11. Verfahren zur Herstellung eines Solarabsorbers gemäß einem der vorhergehenden Ansprüche, mit folgenden Schritten:
- Einlegen einer im Querschnitt runden, elliptischen oder birnenförmigen Rohrleitung (2) zwischen zwei an einer Absorberplatte (1) im Abstand voneinander angeordneter Haltebacken (3a, 3b),
- Formen des Querschnitts der Rohrleitung (2) so, daß an Wirkflanken (5a, 5b) der Haltebacken (3a, 3b) befindliche Bereiche der Wandung (2a) der Rohrleitung (2) fest und im wesentlichen formschlüsssig an den Wirkflanken (5a, 5b) der Haltebacken (3a, 3b) anliegen und der Querschnitt der Rohrleitung (2) zwischen den Haltebacken (3a, 3b) im wesentlichen die Form wenigstens eines Abschnitts einer Ellipse oder eines Ovals annimmt, deren Nebenscheitel (N1, N2) in einer zwischen den Haltebacken (3a, 3b) verlaufenden Ebene (E) und deren Hauptscheitel (H1, H2) in einer zu der Absorberplatte (1) im wesentlichen parallel oder zu der Symmetrieebene (E) quer verlaufenden Ebene (R) angeordnet sind, und
- Einformen einer längs der Rohrleitung (2) verlaufenden, einzigen Einbuchtung (8) in die Rohrleitung (2) im Bereich ihres von der Absorberplatte (1) abliegenden Nebenscheitels (N2), wobei die Einbuchtung (8) vorzugsweise eine im wesentlichen stetig verlaufende gewölbte Form hat.

12. Verfahren zur Herstellung eines Solarabsorbers nach Anspruch 11,
dadurch gekennzeichnet, daß wenigstens einer der beiden Haltebacken (3a, 3b) vor dem Einlegen der Rohrleitung (2) eine Stellung einnimmt, die ein Einlegen der Rohrleitung (2) zwischen die Haltebacken (3a, 3b) ermöglicht, und daß nach dem Einlegen der Rohrleitung (2) zwischen die Haltebacken (3a,3b) eine Kraft auf wenigstens einen der beiden Haltebacken (3a, 3b) so ausgeübt wird, daß dieser zusammen mit der Rohrleitung (2) so verformt wird, daß die Bereiche der Wandung (2a) der Rohrleitung (2) sich formschlüssig an die Wirkflächen (5a, 5b) der Haltebacken (3a, 3b) anlegen.

13. Verfahren zur Herstellung eines Solarabsorbers nach Anspruch 11,
dadurch gekennzeichnet, daß wenigstens einer der beiden Haltebacken (3a, 3b) vor dem Einlegen der Rohrleitung (2) eine Stellung einnimmt, die ein Einlegen der Rohrleitung (2) zwischen die Haltebacken (3a, 3b) ermöglicht, und daß nach dem Einlegen der Rohrleitung (2) zwischen die Haltebacken (3a, 3b) eine Kraft auf die Rohrleitung (2) ausgeübt wird, damit sich die Wandung (2a) der Rohrleitung (2) wenigstens teilweise formschlüssig an die Wirkflächen (5a, 5b) der Haltebacken (3a, 3b) anlegt, und daß dann eine Kraft auf wenigstens einen der beiden Haltebacken (3a, 3b) so ausgeübt wird, daß sich dessen Wirkflächen (5a) formschlüssig an die Bereiche der Wandung (2a) der Rohrleitung (2) anlegen.

14. Verfahren zur Herstellung eines Solarabsorbers nach einem der Ansprüche 11 bis 13,
dadurch gekennzeichnet, daß auf wenigstens einen der beiden Haltebacken (3a, 3b) eine Kraft (H) ausgeübt wird, die diesen mit seinem freien Rand (4a, 4b) in die Einbuchtung (8) der Rohrleitung (2) drängt.

15. Verfahren zur Herstellung eines Solarabsorbers nach einem der Ansprüche 12 bis 14,
dadurch gekennzeichnet, daß das Formen des Querschnitts der Rohrleitung (2), das Andrücken des oder der Haltebacken (3a, 3b) durch Ausüben einer Kraft auf den oder die Haltebacken und das Einformen der Einbuchtung (8) in einem einzigen Arbeitsgang erfolgt, insbesondere mittels einer Rollenmaschine.

16. Verfahren zur Herstellung eines Solarabsorbers nach einem der Ansprüche 11 bis 15,
dadurch gekennzeichnet, daß die Wandung (2a) der Rohrleitung (2) durch eine Kraft (F) aus ihrer ursprünglichen Querschnittsgestalt in die an den Wirkflächen (5a, 5b) formschlüssig anliegende Gestalt verformt wird.

17. Verfahren zur Herstellung eines Solarabsorbers nach einem der Ansprüche 11 bis 16,
dadurch gekennzeichnet, daß bei einem Solarabsorber mit unterschiedlich langen Rohrleitungen (2) oder Rohrleitungsabschnitten während des Herstellungsvorgangs des Solarabsorbers der Querschnitt der Rohrleitungen (2) oder der Rohrleitungsabschnitte so umgeformt wird, daß alle Rohrleitungen (2) oder Rohrleitungsabschnitte einen zumindest im wesentlichen übereinstimmenden Druckverlust aufweisen.

## Claims

1. Solar absorber having a conduit (2) for fluid flow which is secured to an absorber panel (1) by means of at least two jaws (3a, 3b) mounted in spaced relationship on the absorber panel (1), wherein the wall (2a) of the conduit (2) engages the active flanks (5a, 5b) of the jaws (3a, 3b) in a snugly fitting and substantially positively locking manner, and wherein the cross-section of the conduit (2) between the jaws (3a, 3b) is substantially shaped like at least a portion of an ellipse or an oval of which the secondary vertices (N1, N2) are located in a first plane (E) passing between the jaws (3a, 3b) and the main vertices (H1, H2) are located in a second plane (R) which is substantially parallel to the absorber panel or transverse to the first plane (E),
characterized in that in the region near its secondary vertex (N2) opposite to the absorber panel (1), the conduit (2) is provided with a single indentation (8) extending in the longitudinal direction of the conduit (2), which indentation, in particular, has a substantially smoothly arched shape.

2. Solar absorber according to claim 1,
characterized in that the two jaws (3a, 3b) are encircling the conduit (2) each to a different degree.

3. Solar absorber according to claim 1 or 2,
characterized in that at least one of the two jaws (3a, 3b) engages into the indentation (8) of the conduit (2) with its free edge (4a, 4b).

4. Solar absorber according to anyone of claims 1 to 3,
characterized in that at least one of the two jaws (3a, 3b) is formed with at least one weakened portion (7) on its interior and/or exterior face, which, more particularly, is shaped to form a recess (7) parallel to the free edge (4a, 4b) of the jaw and having more particularly a V-shaped cross-section.

5. Solar absorber according to anyone of the preceding claims,
characterized in that at least one of the two jaws (3a, 3b) is constituted by several portions (13a, 23a) which are removably connected with each other.

6. Solar absorber according to claim 5,
characterized in that one of the two portions (13a) of the jaw (3a) includes a hook (14) to engage with a correspondingly shaped catch (15) on the other portion (23a) of the jaw (3a).

7. Solar absorber according to anyone of the preceding claims,
characterized in that at least one of the jaws (3a, 3b) is provided on its active surface (5a, 5b) with raised areas (18) which engage into the wall (2a) of the conduit (2) in a positively locking manner.

8. Solar absorber according to anyone of the preceding claims,
characterized in that at least one of the free edges (4a, 4b) of the jaws (3a, 3b) includes a recess (9) running along it.

9. Solar absorber according to anyone of claims 1 to 7,
characterized in that at least one of the free edges (4a, 4b) of the jaws (3a, 3b) is directed away from the outer surface of the conduit wall (2a), in order to permit the jaw (3a) and/or the jaw (3b) to be gripped from below.

10. Solar absorber according to anyone of the preceding claims,
characterized in that a conduit trench formed in the absorber panel (1) comprises in the area of the secondary vertex (N1) which is adjacent the absorber panel (1) a raised convexity (11) extending along the jaws (3a, 3b).

11. Method of manufacturing a solar absorber according to anyone of the preceding claims, said method comprising the following steps:
- laying a conduit (2) of round, elliptic or pear-shaped cross-section into the gap existing between two jaws (3a, 3b) mounted in spaced relationship on an absorber panel (1),
- bringing the cross-section of the conduit (2) into such a shape that areas of the wall (2a) of the conduit (2) which are adjacent the active flanks (5a, 5b) of the jaws (3a, 3b), are contacting the active flanks (5a, 5b) of the jaws (3a, 3b) in a firm and substantially positively locking manner and that the cross-section of the conduit (2) in-between the jaws (3a, 3b) adopts the general shape of at least a portion of an ellipse or an oval of which the secondary vertices (N1, N2) are located in a plane (E) passing between the jaws (3a, 3b) and the main vertices (H1, H2) are located in a plane (R) substantially parallel to the absorber panel (1) or transverse to the plane of symmetry (E), and
- forming in the conduit (2), in the longitudinal direction thereof, a single indentation (8) in the area of its secondary vertex (N2) opposite to the absorber panel (1), said indentation (8) having preferably a substantially smoothly arched shape.

12. Method of manufacturing a solar absorber according to claim 11,
characterized in that prior to placing the conduit (2) at least one of the two jaws (3a, 3b) is in a position which permits putting the conduit (2) into the gap between the jaws (3a, 3b), and in that after the placing of the conduit (2) between the jaws (3a, 3b), a force is applied onto at least one of the two jaws (3a, 3b) in such a manner that together with the conduit (2) it will be deformed in such a way that the areas of the wall (2a) of the conduit (2) will come into contact with the active surfaces (5a, 5b) of the jaws (3a, 3b) in a positively locking manner.

13. Method of manufacturing a solar absorber according to claim 11,
characterized in that prior to placing the conduit (2) at least one of the two jaws (3a, 3b) is in a position which permits putting the conduit (2) into the gap between the jaws (3a, 3b), and in that after the placing of the conduit (2) between the jaws (3a, 3b), a force will be applied to the conduit (2) so that the wall (2a) of the conduit (2) will come into contact with the active surfaces (5a, 5b) of the jaws (3a, 3b) in at least a partially positively locking manner, and that a force will then be applied to at least one of the two jaws (3a, 3b) in such a manner that its active surfaces (5a) will come into contact with the areas of the wall (2a) of the conduit (2) in a positively locking manner.

14. Method of manufacturing a solar absorber according to anyone of claims 11 to 13,
characterized in that a force (H) will be applied to at least one of the two jaws (3a, 3b) to force the latter with its free edge (4a, 4b) into the indentation (8) of the conduit (2).

15. Method of manufacturing a solar absorber according to anyone of claims 12 to 14.
characterized in that the conformation of the cross-section of the conduit (2), the pressing into contact of the jaw or jaws (3a, 3b) by applying a force to the jaw or jaws, and the forming of the indentation (8) are carried out in a single operation, more particularly by means of a roller machine.

16. Method of manufacturing a solar absorber according to anyone of claims 11 to 15,
characterized in that the wall (2a) of the conduit (2) is deformed by a force (F) to change from its original cross-sectional shape into the shape in which it contacts the active surfaces (5a, 5b) in a positively locking manner.

17. Method of manufacturing a solar absorber according to anyone of claims 11 to 16,
characterized in that in a solar absorber having conduits (2) or conduit portions of different lengths, during the manufacturing process of the solar absorber, the cross-section of the conduits (2) or the conduit portions will be deformed in such a way that all conduits (2) or conduit portions will have an at least substantially corresponding pressure loss.

## Revendications

1. Absorbeur solaire comprenant un tuyau (2) pouvant être traversé par un fluide et étant attaché à un panneau d'absorbeur (1) par l'intermédiaire d'au moins deux mors (3a, 3b) montés espacés l'un de l'autre sur le panneau d'absorbeur (1), la paroi (2a) du tuyau (2) étant en contact, de façon bien posée et sensiblement par conjugaison des formes, sur les flancs actifs (5a, 5b) des mors (3a, 3b), et la section transversale du tuyau (2) se trouvant entre les mors (3a, 3b) possède la forme générale d'au moins une partie d'une ellipse ou d'un ovale dont les sommets secondaires (N1, N2) sont disposés dans un premier plan (E) s'étendant entre les mors (3a, 3b) et dont les sommets primaires (H1, H2) sont disposés dans un second plan (R) sensiblement parallèle au panneau d'absorbeur ou transversal au premier plan (E),
caractérisé en ce que, dans la zone de son sommet secondaire (N2) éloigné du panneau d'absorbeur (1), le tuyau (2) comporte une cavité unique (8) s'étendant dans la direction longitudinale du tuyau (2), cette cavité possédant notamment une configuration arquée d'une allure sensiblement progressive.

2. Absorbeur solaire selon la revendication 1,
caractérisé en ce que les deux mors (3a, 3b) entourent le tuyau (2) chacun jusqu'à un degré différent.

3. Absorbeur solaire selon la revendication 1 ou 2,
caractérisé en ce que, au moins, un des deux mors (3a, 3b) pénètre, avec son bord libre (4a, 4b), dans la cavité (8) du tuyau (2).

4. Absorbeur solaire selon l'une quelconque des revendications 1 à 3,
caractérisé en ce que, au moins, un des deux mors (3a, 3b) comporte sur sa face intérieure et/ou sa face extérieure une partie de section réduite (7) qui, notamment, a la forme d'une échancrure (7) s'étendant parallèlement au bord libre (4a, 4b) du mors et ayant notamment une section transversale en V.

5. Absorbeur solaire selon l'une quelconque des revendications précédentes,
caractérisé en ce que, au moins, un des deux mors (3a, 3b) est constitué par plusieurs parties (13a, 23a), connectées de façon amovible les unes avec les autres.

6. Absorbeur solaire selon la revendication 5,
caractérisé en ce qu'une des deux parties (13a) du mors (3a) comporte un crochet (14) qui est en prise avec une encoche (15), d'une configuration correspondante, pratiquée dans l'autre partie (23a) du mors (3a).

7. Absorbeur solaire selon l'une quelconque des revendications précédentes,
caractérisé en ce que, au moins, un des deux mors (3a, 3b) comporte dans sa surface active (5a, 5b) des zones en relief (18) qui entrent en prise avec la paroi (2a) du tuyau (2) par conjugaison des formes.

8. Absorbeur solaire selon l'une quelconque des revendications précédentes,
caractérisé en ce que, au moins, un des bords libres (4a, 4b) des mors (3a, 3b) comporte une échancrure (9) le suivant.

9. Absorbeur solaire selon l'une quelconque des revendications 1 à 7,
caractérisé en ce que, au moins, un des bords libres (4a, 4b) des mors (3a, 3b) est dirigé en éloignement de la surface extérieure de la paroi de tuyau (2a), pour permettre d'attaquer le mors (3a) et/ou le mors (3b) d'en bas.

10. Absorbeur solaire selon l'une quelconque des revendications précédentes,
caractérisé en ce qu'un logement de tuyau pratiqué dans le panneau d'absorbeur (1) comporte un bombement (11) en relief et s'étendant le long des mors (3a, 3b) et disposé dans la zone du sommet secondaire (N1) voisin du panneau d'absorbeur (1).

11. Méthode de fabrication d'un absorbeur solaire selon l'une quelconque des revendications précédentes, ladite méthode comprenant les phases suivantes:
- mise en place d'un tuyau (2), de section transversale ronde, elliptique ou piriforme, entre deux mors (3a, 3b), montés espacés l'un de l'autre sur un panneau d'absorbeur (1),
- mise en forme de la section transversale du tuyau (2) de sorte que des zones de la paroi (2a) du tuyau (2) qui se trouvent adjacentes à des surfaces actives (5a, 5b) des mors (3a, 3b), sont en contact avec les surfaces actives (5a, 5b) des mors (3a, 3b) de façon ferme et sensiblement par conjugaison des formes, et que la section transversale du tuyau (2) entre les mors (3a, 3b) adopte la forme générale d'au moins une partie d'une ellipse ou d'un ovale dont les sommets secondaires (N1, N2) sont disposés dans un plan (E) passant entre les mors (3a, 3b) et dont les sommets primaires (H1, H2) sont disposés dans un plan (R) qui s'étend sensiblement parallèlement au panneau d'absorbeur (1) ou transversalement au plan de symétrie (E), et
- aménagement dans le tuyau (1) d'une cavité unique (8) s'étendant le long du tuyau (2), dans la zone de son sommet secondaire (N2) éloigné du panneau d'absorbeur (1), la cavité (8) présentant de préférence une forme arquée sensiblement progressive.

12. Méthode de fabrication d'un absorbeur solaire selon la revendication 11,
caractérisée en ce que, avant la mise en place du tuyau (2), au moins un des deux mors (3a, 3b) se trouve dans une position permettant la mise en place du tuyau (2) entre les mors (3a, 3b), et en ce que, après la mise en place du tuyau (2) entre les mors (3a, 3b), une force est appliquée à un des deux mors (3a, 3b), au moins, et de manière à déformer celui-ci ensemble avec le tuyau (2) de manière que les zones de la paroi (2a) du tuyau (2) prennent contact avec les surfaces actives (5a, 5b) des mors (3a, 3b) par conjugaison des formes.

13. Méthode de fabrication d'un absorbeur solaire selon la revendication 11,
caractérisée en ce que, avant la mise en place du tuyau (2), au moins un des deux mors (3a, 3b) se trouve dans une position permettant la mise en place du tuyau (2) entre les mors (3a, 3b), et en ce que, après la mise en place du tuyau (2) entre les mors (3a, 3b), une force est appliquée au tuyau (2) afin que la paroi (2a) du tuyau prenne contact avec les surfaces actives (5a, 5b) des mors (3a, 3b), et ce au moins partiellement par conjugaison des formes, et en ce que, après, une force est appliquée à un des deux mors (3a, 3b), au moins, de telle sorte que les surfaces actives (5a) de celui-ci prennent contact avec les zones de la paroi (2a) du tuyau (2) par conjugaison des formes.

14. Méthode de fabrication d'un absorbeur solaire selon l'une quelconque des revendications 11 à 13,
caractérisée en ce qu'on applique sur un des deux mors (3a, 3b), au moins, une force (H) qui le contraint à pénétrer dans la cavité (8) du tuyau (2) par son bord libre (4a, 4b).

15. Méthode de fabrication d'un absorbeur solaire selon l'une quelconque des revendications 12 à 14,
caractérisée en ce que les actions de donner forme à la section transversale du tuyau (2), de serrer le ou les mors (3a, 3b) par application d'une force sur le ou les mors, et d'aménager la cavité (8) s'effectuent dans une seule opération, notamment au moyen d'une machine à rouleaux.

16. Méthode de fabrication d'un absorbeur solaire selon l'une quelconque des revendications 11 à 15,
caractérisée en ce que la paroi (2a) du tuyau (2) est déformée, à partir de la configuration originale de sa section transversale, par une force (F) pour prendre la forme épousant les surfaces actives (5a, 5b) par conjugaison des formes.

17. Méthode de fabrication d'un absorbeur solaire selon l'une quelconque des revendications 11 à 16,
caractérisée en ce que dans le cas d'un absorbeur solaire ayant des tuyaux (2) ou des sections de tuyau de longueurs différentes, au cours du processus de fabrication de l'absorbeur solaire, la section transversale des tuyaux (2) ou des sections de tuyau sera déformée de telle façon que tous les tuyaux (2) ou sections de tuyau présentent une chute de pression sensiblement, au moins, correspondante.
